(19) Europäisches Patentamt
European Patent Office
Office européen des brevets

(11) **EP 2 978 523 B1**

(12) **EUROPÄISCHE PATENTSCHRIFT**

(45) Veröffentlichungstag und Bekanntmachung des Hinweises auf die Patenterteilung:
**05.05.2021 Patentblatt 2021/18**

(21) Anmeldenummer: **14714256.6**

(22) Anmeldetag: **28.03.2014**

(51) Int Cl.:
*B01J 20/04* (2006.01)    *B01D 53/02* (2006.01)
*B01J 20/30* (2006.01)    *B01J 20/28* (2006.01)

(86) Internationale Anmeldenummer:
**PCT/EP2014/056321**

(87) Internationale Veröffentlichungsnummer:
**WO 2014/154876 (02.10.2014 Gazette 2014/40)**

(54) **GRANULAT ZUR ABSORPTION VON SCHADGASEN UND VERFAHREN ZU DESSEN HERSTELLUNG**

GRANULAR MATERIAL FOR ABSORPTION OF HARMFUL GASES AND PROCESS FOR PRODUCTION THEREOF

GRANULAT SERVANT À ABSORBER DES GAZ NOCIFS ET PROCÉDÉ DE PRODUCTION DUDIT GRANULAT

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**

(30) Priorität: **28.03.2013 DE 102013005497**

(43) Veröffentlichungstag der Anmeldung:
**03.02.2016 Patentblatt 2016/05**

(73) Patentinhaber: **Fels-Werke GmbH**
**38640 Goslar (DE)**

(72) Erfinder:
• **BOENKENDORF, Ulf**
**31188 Holle (DE)**
• **STUMPF, Thomas**
**38667 Bad Harzburg (DE)**
• **HAASE, Christina**
**38855 Nordharz (DE)**
• **MEHLING, Christine**
**38871 Abbenrode (DE)**

(74) Vertreter: **Maikowski & Ninnemann**
**Patentanwälte Partnerschaft mbB**
**Postfach 15 09 20**
**10671 Berlin (DE)**

(56) Entgegenhaltungen:
EP-A1- 0 487 913    EP-A1- 0 748 766
WO-A1-2011/039034    WO-A1-2013/034314

Bemerkungen:
Die Akte enthält technische Angaben, die nach dem Eingang der Anmeldung eingereicht wurden und die nicht in dieser Patentschrift enthalten sind.

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

## Beschreibung

Die vorliegende Erfindung betrifft ein Granulat aus aufbauagglomerierten, porösen Granalien zur Abscheidung, insbesondere Absorption, von Schadgasen, insbesondere von SOx, HCl, und/oder HF, sowie zur Adsorption weiterer Verunreinigungen wie organischen Verbrennungsrückständen aus Abgasen thermischer Prozesse, wobei die Granalien als Wirkstoff bzw. Absorptionsmittel $CaCO_3$ und/oder $Ca(OH)_2$ enthalten.

Im Rahmen der vorliegenden Anmeldung bedeutet Sorption, dass sich Teilchen an der äußeren oder inneren Oberfläche eines Partikels anreichern. Dabei versteht man unter Adsorption, dass die Teilchen durch mechanische oder physikalische Kräfte gebunden werden. Dahingegen erfolgt die Absorption eines Teilchens an einen Partikel über eine chemische Bindung.

Abgase aus thermischen Prozessen (=Verbrennungsgase) sind die bei einer Verbrennung entstehenden, nicht mehr nutzbaren gas- und/oder staubförmigen Abfallprodukte. Je nach Brennstoff enthalten die Abgase unterschiedliche Anteile von für Mensch und Umwelt schädlichen Bestandteilen, z.B. Schwefeloxide ($SO_X$), Chlorwasserstoff (HCl), Stickoxide ($NO_X$) und/oder Dioxine. Infolgedessen ist für technische und industrielle Anlagen in der Regel eine Abgasreinigung vorgeschrieben. Dabei unterscheidet man generell zwischen trockenen und nassen Abgasreinigungsverfahren.

Bei trockenen Abgasreinigungsverfahren werden die Abgase mit Feststoffen in Kontakt gebracht, die mit den schädlichen Bestandteilen der Abgase reagieren. Dadurch werden die schädlichen Bestandteile aus dem Abgas entfernt. Zur Entschwefelung wird beispielsweise Branntkalk (CaO), Kalkhydrat ($Ca(OH)_2$) und/oder Kalksteinmehl ($CaCO_3$) verwendet. Als Kalkstein werden Sedimentgesteine bezeichnet, die ganz überwiegend aus Calciumcarbonat ($CaCO_3$) in Form der Mineralien Calcit und Aragonit bestehen. Kalksteinmehl ist gemahlener Kalkstein. Branntkalk wird durch Brennen von Kalkstein hergestellt. Branntkalk besteht, abgesehen von geringfügigen Verunreinigungen, aus Calciumoxid (CaO). Kalkhydrat oder auch gelöschter Kalk entsteht unter starker Wärmeentwicklung beim Versetzen von Branntkalk mit Wasser. Man nennt dies auch Kalklöschen. Kalkhydrat ist ein helles Pulver bzw. Mehl und besteht, abgesehen von geringfügigen Verunreinigungen, aus Calciumhydroxid ($Ca(OH)_2$). Alle diese Calciumverbindungen reagieren mit dem in den Abgasen enthaltenen $SO_2$ bzw. $SO_3$ im Wesentlichen zu Calciumsulfit ($CaSO_3$) oder Calciumsulfat ($CaSO_4$). Das Calciumsulfat wird dann in entsprechenden Filtern abgeschieden. Grundsätzlich ist es dabei bekannt, die pulver- bzw. mehlförmigen Entschwefelungsmittel, insbesondere das Kalksteinmehl, in den Verbrennungsraum oder Abgasstrom einzublasen.

Alternativ dazu findet die Reaktion in einem der Verbrennung nachgeschalteten Feststoff-Abgasreaktor, wie z.B. einem Schüttschichtfilter, statt, bei dem das zu reinigende Abgas eine lockere körnige Schicht des Sorptionsmittels durchströmt. Der Schüttschichtfilter kann z.B. als Festbettabsorber (mit ruhender Schüttung), Wanderbettabsorber (mit bewegter Schüttung) oder Wirbelbettabsorber (mit Ausbildung eines Wirbelbetts) ausgebildet sein. Schüttschichtfilter werden aufgrund des zu hohen Druckverlusts üblicherweise nicht mit pulverförmigen Sorptionsmitteln, sondern mit Sorptionsgranulaten betrieben.

Bekannt sind aufbauagglomerierte Sorptionsgranalien ausschließlich aus Kalkhydrat und/oder Kalksteinmehl. Agglomerieren ist ein Oberbegriff für Verfahren zur mechanischen Kornvergrößerung und bedeutet das Zusammenlagern und aneinander Binden von feindispersen, festen Primärpartikeln zu größeren Teilchenverbänden, den Agglomeraten. Dabei wird zwischen Press- und Aufbauagglomeration unterschieden. Bei der Pressagglomeration werden durch Presswerkzeuge äußere Kräfte auf die Teilchen einer trockenen Schüttung ausgeübt, so dass viele Kontakte mit geringen Kontaktabständen gebildet werden. Bei der Aufbauagglomeration werden die einzelnen Primärteilchen oder schon gebildete kleine Agglomerate durch Relativbewegung und Befeuchtung, gegebenenfalls mit einem zusätzlichen Bindemittel aneinander angelagert. Durch diese Relativbewegung kommt es zu einem Wechselspiel zwischen Bindekräften und Trennkräften. Die Trennkräfte entstehen dabei durch Stoß-, Scher-, Fall- und Reibbeanspruchung. Zur Agglomeration kommt es dann, wenn die Bindekräfte überwiegen. Man unterscheidet dabei vier Arten der Aufbauagglomeration, nämlich Rollgranulierung, Mischgranulierung, Fließbettgranulierung und Granulierung in Flüssigkeiten.

Beim Aufbaugranulieren mit Feuchtigkeit lagern sich die einzelnen Primärpartikel, insbesondere die Kalkhydratkörner, mit der Feuchtigkeit dicht aneinander. Es entsteht ein sehr dichtes, nahezu geschlossenes Gefüge. Infolgedessen können die Schadgasmoleküle nur schwer in das Innere der bekannten Sorptionsgranalien eindringen. Es wurde insbesondere festgestellt, dass $SO_X$ nur schalenförmig, in einem relativ dünnen Außenschalenbereich unter Bildung von Calciumsulfat ($CaSO_4$) absorbiert wird. Das $Ca(OH)_2$ im Inneren der bekannten Granalien bleibt z.B. bis zu 40 Gew.-% ungenutzt. Offenbar wird die Diffusion des $SO_X$-Gases zusätzlich durch die Calciumsulfatbildung im Außenschalenbereich behindert.

Ein weiteres mineralisches Gasabsorptionsgranulat ist aus der DE 10 2009 045 278 A1 bekannt. Dieses umfasst calcium-basierte poröse Granalien, die einen zumindest 80 Gew.-% Calciumcarbonat ($CaCO_3$) enthaltenden Kern sowie zumindest eine, den Kern umhüllende und Calciumhydroxid ($Ca(OH)_2$) enthaltende Agglomerationsschicht aufweisen. Die Granalien weisen einen Anteil von Calciumhydroxid von zumindest 60 Gew.-% bezogen auf die Gesamttrockenmasse der Granalien sowie, eine im Wesentlichen kugelförmige Gestalt und eine BET-Oberfläche von zumindest 8 $m^2$/g auf.

Die Granalien sollen gemäß einer bevorzugten Ausführungsform Mikroporen mit Porendurchmessern von kleiner als 100 µm, Mesoporen mit Porendurchmessern von 100 bis 500 µm und/oder Makroporen mit Porendurchmessern oberhalb von 500 µm aufweisen. Das mineralische Entschwefelungsmittel der DE 10 2009 045 278 A1 wird mittels Aufbauagglomeration hergestellt, indem ein Mischgut, das mindestens Calciumhydroxid in Form von Pulver sowie ein, zumindest 80 Gew.-% Calciumcarbonat enthaltendes Mutterkorn umfasst, und Wasser in einem Granulier- oder Pelltiermischer aufgegeben werden, durch Granulieren Granalien erzeugt werden und die so erzeugten Granalien getrocknet werden.

Im Rahmen der vorliegenden Erfindung wurde allerdings heraus gefunden, dass der hohe Wassergehalt und die Porosität der aus der DE 10 2009 045 278 A1 bekannten Granalien ebenfalls nicht die erwartete hohe $SO_X$-Abscheideleistung erbringen. Wie bei den Kalkhydrat-Granalien ohne "Mutterkorn" bildet sich ein außenschaliger, den Abscheidefortschritt behindernder Absorptionsbereich während im Innern der Granalien noch relativ viel unverbrauchtes bzw. ungenutztes Kalkhydrat vorhanden ist. Offenbar steht das bei Raumtemperatur adsorbierte Wasser in den Granalien nicht reaktionsfördernd bei höheren Temperaturen zur Verfügung, bei denen die Absorptionsprozesse bzw. die Abgasreinigung ablaufen. Diese hohen Temperaturen werden bekanntlich durch Abgastemperaturen z. B. zwischen 100 und 900° C generiert. Es scheint auch hier neben der produktionstechnisch bedingten diffusionsdichten Schalenbildung eine Art Verstopfung durch die Calciumsulfatbildung in den äußeren Randbereichen der Granalien stattzufinden, so dass das weitere Eindringen von Gas in das Innere der Granalien behindert wird.

Um dies zu verhindern, wird im Rahmen der DE 10 2011 112 657 A1 und der WO 2013/034314 A1 vorgeschlagen, aufbauagglomerierte Granalien zu verwenden, die neben Kalkhydrat und/oder Kalksteinehl ein Wasser kapillar speicherndes Leichtzuschlagstoffmehl und einen adsorbierten Wassergehalt zwischen 2 und 30 Gew.% bezogen auf die Summe der Bestandteile der Calciumverbindung, Leichtzuschlagstoff und Wasser aufweisen. Die Leichtzuschlagstoffe besitzen die Fähigkeit, Wasser kapillar derart zu speichern, dass Wasser auch noch bei höheren Temperaturen, wie sie z.B. in Verbrennungsaggregaten nachgeschalteten Abgasreinigungsanlagen auftreten, in ausreichender Menge in den Granalien zur Verfügung steht. Dadurch soll die Reaktion zwischen den $SO_X$-Gasen und den Kalkhydratmehlkörnern und/oder den Kalksteinmehlkörnern begünstigt werden, indem auf der Oberfläche der Mehlkörner Wasser zur Lösung von $SO_X$-Gasen vorhanden ist und aus der Lösung die Calciumsulfatbildung stattfindet. In jedem Fall bewirkt der Wasser speichernde Leichtzuschlagstoff eine Erhöhung des Abscheidegrads der $SO_X$-Gase. Zudem wird bewirkt, dass nahezu das gesamte $Ca(OH)_2$ bzw. das gesamte $CaCO_3$ einer Granalie mit dem $SO_X$-Gas zu Calciumsulfat reagieren kann, ohne dass äußere Reaktionsschichten den Reaktionsfortschritt blockieren. Eine "Verstopfung", wie sie bei den bekannten Granalien ähnlichen Aufbaus aber ohne Leichtzuschlagstoff auftritt, wird gemäß der DE 10 2011 112 657 A1 und der WO 2013/034314 A1 weitgehend vermieden.

Aus der DE 10 2011 113 034 A1 geht ein Soprtionsgranulat hervor, dessen Granalien in einem Pressverfahren hergestellte Formkörper sind. Die Granalien weisen als $SO_X$-Absorptionsmittel Kalkhydrat und/oder Kalksteinmehl und daneben feinteiliges zerfasertes Cellulosefasermaterial auf. Des Weiteren weisen die Granalien einen adsorbierten Wassergehalt bis 30 Gew.% bezogen auf die Menge aus dem $SO_X$-Absorptionsmittel und dem zerfaserten Material auf. Das zerfaserte Cellulosefasermaterial erhöht die Porosität bzw. Kapillarität der Granalien, wodurch die Diffusion der Schadgase ins Innere der Granalien verbessert wird. Zudem wird ebenfalls ein Wasserreservoir geschaffen und dadurch die Abscheideleistung erhöht.

Die aus der DE 10 2011 112 657 A1, der WO 2013/034314 A1 und der DE 10 2011 113 034 A1 bekannten Sorptionsgranulate haben sich bewährt.

Aufgabe der vorliegenden Erfindung ist die Bereitstellung eines alternativen Sorptionsgranulats aus aufbauagglomerierten, mindestens eine SO-absorbierende Calciumverbindung aufweisenden Granalien, bei denen der Absorptionsfortschritt ins Innere nicht durch eine Schalenbildung behindert wird und die einen hohen $SO_X$-Abscheidegrad gewährleisten.

Weitere Aufgabe ist die Bereitstellung eines Verfahrens zur Herstellung eines derartigen Sorptionsgranulats.

Diese Aufgaben werden durch ein Sorptionsgranulat mit den Merkmalen von Anspruch 1 sowie ein Verfahren gemäß Anspruch 15 gelöst.

Im Folgenden wird die Erfindung anhand einer Zeichnung beispielhaft näher erläutert. Es zeigen:

Figur 1:    Schematisch einen Querschnitt einer Granalie des erfindungsgemäßen Sorptionsgranulats nach einer ersten Ausführungsform der Erfindung

Figur 2:    Schematisch einen Querschnitt einer Granalie des erfindungsgemäßen Sorptionsgranulats nach einer weiteren Ausführungsform der Erfindung

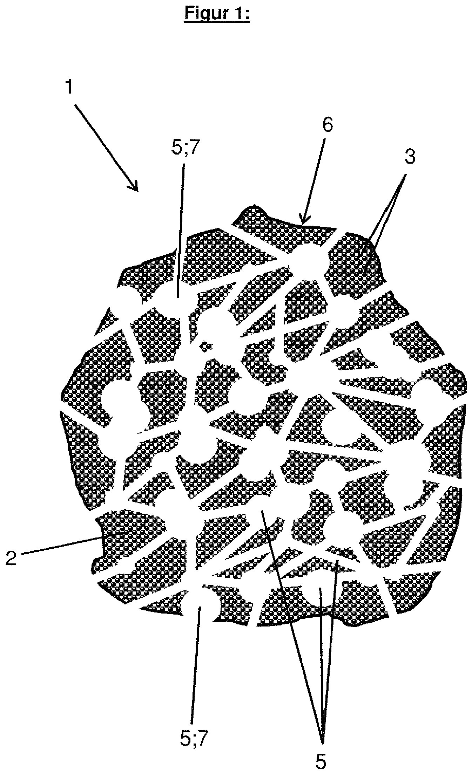

Nach einer ersten Ausführungsform der Erfindung (Fig. 1) besteht das erfindungsgemäße Sorptionsgranulat aus einer Vielzahl von aufbauagglomerierten, kernlosen Granalien 1. Die kernlosen, einheitlichen bzw. monolithischen Granalien 1 weisen in an sich bekannter Weise jeweils ein Haufwerk 2 aus miteinander agglomerierten Primärpartikeln 3 (in den Figuren als Punkte schematisch dargestellt) auf. Monolithisch im Sinne der Erfindung meint dabei, dass die Granalien 1 ein homogenes Gefüge aufweisen. Haufwerke im Sinne der Erfindung sind Gemische fester Partikel, die lose vermengt oder fest miteinander verbunden sind. Die feinteiligen bzw. feindispersen Primärpartikel 3 der erfindungsgemäßen Granalien 1 weisen eine Korngröße $\leq 250$ $\mu$m, bevorzugt $\leq 90$ $\mu$m, auf. Es handelt sich somit um Mehlkörner.

Die Granalien 1 enthalten als Hauptbestandteil gewichtsmäßig gesehen eine $SO_X$- und HCl absorbierende Calciumverbindung in Form von $Ca(OH)_2$ und/oder $CaCO_3$. Das heißt, die Menge an $Ca(OH)_2$ oder $CaCO_3$ (wenn nur eine der beiden Komponenten enthalten ist) bzw. die Summe aus $Ca(OH)_2$ und $CaCO_3$ (wenn beide Komponenten enthalten sind) beträgt > 80 Gew.% bezogen auf den gesamten Feststoffanteil der Granalien 1. Vorzugsweise enthalten die Granalien 1 > 95 Gew.%, $Ca(OH)_2$ und/oder $CaCO_3$, bezogen auf den gesamten Feststoffanteil der Granalien 1. Infolgedessen besteht ein Haupanteil (> 50 Gew.%) der Primärpartikel 3 aus $Ca(OH)_2$ und/oder $CaCO_3$. Insbesondere handelt es sich bei den Primärpartikeln 3 hauptsächlich (> 50 Gew.%) um Kalksteinmehlkörner und/oder Kalkhydratmehlkörner, bezogen auf den gesamten Anteil an Primärpartikeln 3.

Erfindungsgemäß weisen die kernlosen Granalien 1 zudem jeweils ein offenes Porensystem 4 aus miteinander verbundenen, mit Gas, insbesondere Luft, gefüllte Gasporen bzw. Luftporen 5 auf. Das offene Porensystem 4 steht zudem über zahlreiche der Luftporen 5, die an einer Kornaußenfläche bzw. äußeren Kornoberfläche 6 ins Freie münden, mit der Umgebung in Verbindung. Das Porensystem 4 ist somit zur Umgebung geöffnet. Das offene Porensystem 4 durchsetzt bzw. durchzieht somit jeweils die gesamte Granalie 1, insbesondere deren Haufwerk 2.

Dabei handelt es sich bei einem Teil der Luftporen 5 erfindungsgemäß um Poren 7 die während des Granulierungsprozesses mittels eines Porosierungsmittels erzeugt wurden. Die Granalien 1 sind somit porosiert. Das offene Porensystem 4 weist also erfindungsgemäß, Luftporen bzw. Gasporen 7 auf, die während des Granulierungsprozesses mittels eines Porosierungsmittels erzeugt wurden. Diese Poren 7 resultieren aus der Zugabe eines Treibmittels, z.B. Aluminiumpulver und/oder Aluminiumpaste, und/oder eines Luftporenbildners und/oder eines vorgefertigten Schaumes zu der frischen Mischung bzw. Frischmasse bei der Granulierung. Dabei wurde im Rahmen der Erfindung überraschenderweise herausgefunden, dass die mittels des Porosierungsmittels erzeugten Poren 7 zumindest größtenteils bei der Aufbauagglomeration erhalten bleiben. Insbesondere werden sie teilweise zwar zerkleinert bzw. zerstört, erhöhen aber in jedem Fall die für die Gasabsorption wichtige offene Porosität der Granalien 1. Dies war nicht ohne weiteres zu erwarten. Insbesondere erschien die Zugabe eines Porosierungsmittels widersinnig.

Aufgrund der zusätzlichen, mittels des Porosierungsmittels erzeugten Poren 7 weisen die Granalien 1 des erfindungsgemäßen Sorptionsgranulats eine sehr hohe offene Porosität auf. Die erfindungsgemäßen, porosierten Granalien 1 sind somit diffusionsoffen, so dass das zu absorbierende Schadgas nahezu ungehindert bis ins Innere der Granalien vordringen kann und keine unerwünschte Schalenbildung stattfindet. Die Gesamtporosität resultiert selbstverständlich nicht nur aus den mittels des Porosierungsmittels erzeugten Poren 7. Denn die Granalien 1 weisen zudem auch in an sich bekannter Weise Haufwerksporen auf, die zwischen den einzelnen Primärpartikeln 3 vorhanden sind. Außerdem sind in an sich bekannter Weise Verdichtungsporen und/oder Verdunstungsporen enthalten.

Die mittels eines Porosierungsmittels erzeugten Poren 7 weisen oftmals eine nahezu kugelige Form bzw. Kugelform auf. Des Weiteren handelt es sich zumindest teilweise um Makroporen mit einer Porengröße > 50 $\mu$m. Somit ist an der fertig hergestellten Granalie 1 eindeutig zu erkennen, dass diese mittels eines Porosierungsmittels erzeugten Poren 7 aufweist. Auch kann ein Teil der Poren 7 schlauchförmig ausgebildet sein.

Gegebenenfalls zusätzlich nutzbares Potential der mittels eines Porosierungsmittels erzeugten Poren 7 ist deren Wasserspeicherkapazität. Es wird vermutet, dass die erfindungsgemäßen Poren 7 auch dazu dienen, das Kapillarporensystem der Granalien 1 zu unterbrechen. Zumindest wurde im Rahmen der Erfindung herausgefunden, dass in den Granalien 1 kapillar gebundenes Wasser besser zurück gehalten wird und dieses für die Reaktion auch noch bei hohen Temperaturen zur Verfügung gestellt werden kann. Dies begünstigt bekanntermaßen die Reaktion zwischen den $SO_X$-haltigen Abgasen und dem Kalksteinmehl bzw. dem Kalkhydrat, da an der Oberfläche der Kalksteinmehlkörner bzw. der Kalkhydratmehlkörner Wasser zur Lösung von $SO_X$ vorhanden ist und aus der Lösung die Calciumsulfatbildung stattfindet. Dies verbessert die Abscheideleistung des erfindungsgemäßen Sorptionsgranulats ebenfalls. Der Wassergehalt des erfindungsgemäßen Sorptionsgranulats beträgt insbesondere 0,5 bis 10 Gew.%, bevorzugt 1 bis 5 Gew.%, bestimmt nach DIN EN 459-2.

Die Porosität gibt bekanntermaßen das Verhältnis von Hohlraumvolumen zu Gesamtvolumen an und ist somit eine dimensionslose Messgröße. Die Porosität $\phi$ berechnet sich nach

$$\phi = \left(1 - \frac{\rho}{\rho_0}\right) \times 100\%$$

aus der Reindichte $\rho_0$ und der Trockenrohdichte $\rho$.

Erfindungsgemäß weisen die Granalien 1 des erfindungsgemäßen Sorptionsgranulats eine Trockenrohdichte $\rho$ von 0,5 bis 1,2 kg/dm$^3$, bevorzugt 0,7 bis 1,1 kg/dm$^3$ auf. Das heißt, die geringe Trockenrohdichte $\rho$ wird auch ohne oder mit nur geringer Zugabe von anderen porösen Primärpartikeln, z.B. CSH-Mehlkörnern, erfindungsgemäß erreicht. Die von der Porosität unabhängige Reindichte $\rho_0$ liegt bei diesen Granalien 1 vorzugsweise bei 2,0 bis 2,8 kg/dm$^3$,

insbesondere 2,0 bis 2,4 kg/dm$^3$, bevorzugt 2,1 bis 2,3 kg/dm$^3$. Für die Bestimmung der Rohdichte $\rho$ wird vorzugsweise das Rohdichtepyknometer GeoPyc von Micromeritics verwendet. Dabei wird ein Glaszylinder mit DryFlo™, einer feinsandigen Mischung aus Teflonkügelchen und etwas Graphit als Schmiermittel, die sich ähnlich wie eine Flüssigkeit verhält, gefüllt. Der Zylinder wird eingespannt und das Gerät bestimmt durch das Vorantreiben des Zylinderkolbens unter gleichzeitiger Vibration/Drehung des Zylinders das Volumen der DryFlo™ Mischung. Dann wird die Probe in den Zylinder eingebracht, so dass sie in die Mischung DryFlo™ eintaucht und es wird auf die gleiche Weise das Volumen von der Mischung aus DryFlo™ und Probe bestimmt. Da DryFlo™ nicht in die Poren eindringt, erhält man das Gesamtvolumen der Probe (also incl. Porenraum) und daraus die Trockenrohdichte. Die Reindichte $\rho_0$ wird bestimmt mit einem Heliumpyknometer, insbesondere dem Heliumpyknometer accupyc der Firma Micromeritics. Bei der Bestimmung der Reindichte $\rho_0$ mittels Heliumpyknometer werden zwei Probebehälter, deren Volumen exakt bekannt sind, über ein Ventil miteinander verbunden. Einer der Behälter wird mit der Probe befüllt und anschließend evakuiert. Der zweite Behälter wird mit Helium mit einem vorbestimmten Druck befüllt.

Durch Öffnen des Ventiles kommt es zum Druckausgleich. Aus dem Enddruck lässt sich das von der Probe eingenommene Volumen bestimmen. Und aus dem Volumen und der zuvor bestimmten Masse wird die Reindichte berechnet. Die Bestimmung der Dichten erfolgt an getrockneten Proben. Die Proben wurden dazu, analog zur Bestimmung der Feuchte von Kalkhydrat nach DIN EN 459-2:2010-12, bei 105 °C im Trockenschrank bis zur Gewichtskonstanz getrocknet.

Die aus der Roh- und Reindichte bestimmte, erfindungsgemäße Porosität der Granalien 1 beträgt vorzugsweise 45 bis 73 Vol.%, bevorzugt 55 bis 65 Vol.%.

Aufgrund des hohen Anteils an Poren 5;7 weist das erfindungsgemäße Sorptionsgranulat eine sehr geringe Schüttdichte auf. Die Schüttdichte des erfindungsgemäßen Sorptionsgranulats beträgt vorzugsweise 0,5 bis 0,9 kg/dm$^3$, bevorzugt 0,5 bis 0,8 kg/dm$^3$. Trotz der Poren 5;7 ist die Kornfestigkeit und Abriebfestigkeit aber sehr gut. Das erfindungsgemäße Sorptionsgranulat weist vorzugsweise eine Abriebfestigkeit von < 5 Gew.%, bevorzugt < 2 Gew.%, bestimmt mittels Abriebtester der Firma Erweka, auf. Die spezifische Oberfläche des erfindungsgemäßen Sorptionsgranulats gemessen nach BET beträgt vorzugsweise 10 bis 60 m$^2$/g, bevorzugt 20 bis 45 m$^2$/g.

Des Weiteren weist das erfindungsgemäße Sorptionsgranulat vorzugsweise eine Korngrößenverteilung von 1 bis 20 mm, bevorzugt von 2 bis 10 mm, besonders bevorzugt von 2 bis 6 mm auf.

Vorzugsweise weisen die Granalien 1 außerdem zumindest ein, insbesondere film-bildendes, Bindemittel, insbesondere Stärke und/oder Methylcellulose und/oder Carboxymethylcellulose und/oder Glukose und/oder Lignin und/oder Alginate und/oder Tonminerale, bevorzugt Bentonit, auf. Das Bindemittel erzeugt eine Haftkraft zwischen den einzelnen Primärpartikeln 3 des Haufwerks 2. Infolgedessen dient das Bindemittel zur Verfestigung der Granalien und zur Steigerung der Korn- und Abriebfestigkeit der erfindungsgemäßen Granalien 1. Außerdem stabilisiert es die Poren 5;7.

Des Weiteren liegt es selbstverständlich im Rahmen der Erfindung, dass die Granalien 1 weitere Entschwefelungsmittel, z.B. Dolomithydrat ($(Ca(OH)_2 \cdot MgO$ oder ($(Ca(OH)_2 \cdot Mg(OH)_2$) und/oder Dolomitmehl (($(Ca,Mg)CO_3$) und/oder Natriumhydrogencarbonat ($NaHCO_3$) und/oder Soda ($Na_2CO_3$) enthält. Auch können weitere Ad- und/oder Absorptionsmittel, auch für andere Schadgase enthalten sein, wie z.B. Zeolithe und/oder Aktivkohle und/oder Aktivkoks und/oder Schichtsilikate. Dadurch können auch andere Schadstoffe, wie z.B. Quecksilber aus den zu reinigenden Abgasen entfernt werden. Die weiteren Ad- und Absorptionsmittel bilden ebenfalls einen Teil der Primärpartikel 3 des Haufwerks 2.

Selbstverständlich können die Granalien 1 zudem auch weitere bekannte Additive enthalten, welche die Abscheideleistung verbessern, insbesondere Verbindungen der Alkalimetalle. Beispielsweise können die Granalien eines oder mehrere der folgenden Alkalimetalle enthalten: Natriumchlorid, Natriumhydroxid, Natriumnitrat, Natriumphosphat, Natriumbromid, Kaliumchlorid, Kaliumhydroxid, Kaliumhydrogencarbonat, Kaliumcarbonat, Kaliumnitrat, Kaliumphosphat oder Kaliumbromid. Bevorzugte Mengen von den gebundenen Alkalimetallen liegen bei 0,5 bis 5 mol% bezogen auf die Trockensubstanz Kalkstein und/oder Kalkhydrat.

Außerdem können die Granalien 1 auch zusätzlich Mehlkörner eines porösen, mineralischen Produkts, z.B. von Porenbetonmehl, gemäß der DE 10 2011 112 657 A1 oder Materialien mit geringer Reindichte enthalten. Auch können die Granalien 1 feinteiliges, zerfasertes Cellulosematerial gemäß der DE 10 2011 113 034 A1 aufweisen. Beides verbessert die Diffusion des Schadgases ins Innere der Granalien 1 weiter. Sowohl die porösen Mehlkörner als auch das zerfaserte Cellulosematerial bilden ebenfalls Primärpartikel 3 des Haufwerks 2.

Dabei enthält das erfindungsgemäße Sorptionsgranulat vorzugsweise als Hauptbestandteil (Gew.%) bezogen auf den gesamten Feststoffanteil Kalkhydrat und/oder Kalksteinmehl. Insbesondere weist das erfindungsgemäße Gasabsorptionsgranulat > 50 bis 99,9 Gew.%, bevorzugt >80 Gew.%, insbesondere > 95 Gew.% Kalkhydrat und/oder Kalksteinmehl, bezogen auf den gesamten Feststoffanteil auf.

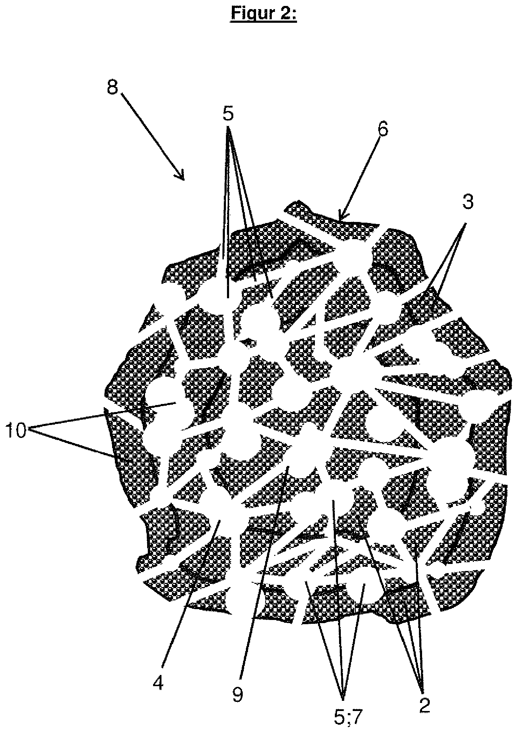

Gemäß einer zweiten Ausführungsform der Erfindung weist das erfindungsgemäße Sorptionsgranulat mehrschichtige Granalien 8 (Fig. 2) auf. Das Sorptionsgranulat kann dabei sowohl die kernlosen Granalien 1 als auch die mehrschichtigen Granalien 8 aufweisen oder lediglich eine Art. Die mehrschichtigen Granalien 8 weisen jeweils ein inneres Mutterkorn bzw. einen inneren Kern 9 sowie zumindest eine, vorzugsweise mehrere, um das Mutterkorn 9 herum angeordnete, aneinander grenzende, Agglomeratschichten 10 auf. Sowohl das Mutterkorn 9 als auch die Agglomeratschichten 10 sind dabei analog wie eine kernlose Granalie 1 aufgebaut. Das heißt, die Agglomeratschichten 10 und das Mutterkorn 9 weisen jeweils ein Haufwerk 2 aus miteinander agglomerierten Primärpartikeln 3 auf, wobei es sich hauptsächlich um Kalksteinmehlkörner und/oder Kalkhydratmehlkörner handelt. Des Weiteren sind zwischen den Primärpartikeln 3 die erfindungsgemäßen Poren 5;7 vorhanden, so dass auch die mehrschichtigen Granalien 9 das offene Porensystem 4 aufweisen. Das heißt, die Poren 5;7 der einzelnen Agglomeratschichten 10 und des Mutterkorns 9 sind ebenfalls miteinander verbunden. Außerdem können die Agglomeratschichten 10 und das Mutterkorn 9 wie oben beschrieben zumindest ein Bindemittel, weitere Ad-/Absorptionsmittel, insbesondere Entschwefelungsmittel, und/oder Additive enthalten. Beispielsweise können sich die einzelnen Agglomeratschichten 10 und das Mutterkorn 9 bezüglich des Gehalts bzw. Anteils der einzelnen Bestandteile unterscheiden. Die Agglomeratschichten 10 und das Mutterkorn 9 weisen in diesem Fall unterschiedliche stoffliche Zusammensetzungen auf.

Die oben angegebenen Werte bezüglich der Schüttdichte, der Porosität, des Wassergehalts, der Kornfestigkeit, der spezifischen Oberfläche, sowie der Korngrößen des erfindungsgemäßen Sorptionsgranulats mit den kernlosen Granalien 1 gelten für das Sorptionsgranulat aus bzw. mit den Granalien 8 mit Mutterkorn 9 gleichermaßen.

Im Folgenden wird nun auf die Herstellung des erfindungsgemäßen Sorptionsgranulats eingegangen: Die Herstellung erfolgt, wie bereits erläutert, mittels Aufbauagglomeration (Feuchtgranulation). Beispielsweise erfolgt die Herstellung mittels Rollagglomeration, z.B. im Granulierteller (auch als Pelletierteller bezeichnet), Granulierkonus oder einer Ganuliertrommel, oder durch Mischgranulierung im Granuliermischer oder mittels Fließbett- bzw. Wirbelbettgranulierung.

Das Sorptionsgranulat mit den kernlosen Granalien 1 wird durch Aufbauagglomeration hergestellt aus einer homogenen Frischmasse bzw. einem Gemisch, das zumindest eine $SO_X$-absorbierende Ca-Mehl-Komponente (also eine $Ca(OH)_2$ und/oder $CaCO_3$ enthaltendes Mehl), wie Kalksteinmehl und/oder Kalkhydrat und/oder Kreide und/oder gefälltes Calciumcarbonat und/oder Dolomitmehl und/oder Dolomithydrat, Wasser sowie erfindungsgemäß zumindest ein Porosierungsmittel enthält. Bei dem Porosierungsmittel handelt es sich um ein Treibmittel und/oder einen Luftporenbildner und/oder vorgefertigten Schaum. Die Herstellung der Frischmasse kann dabei entweder durch Herstellung einer dünnflüssigen Slurry bzw. Schlämme erfolgen, die nach und nach durch Zugabe der mehlförmigen Feststoffe auf die gewünschte Konsistenz gebracht wird. Alternativ dazu wird einem Feststoffgemisch nach und nach das Wasser zugegeben, bis die gewünschte Konsistenz erreicht ist, so dass granuliert werden kann.

Von besonderem Vorteil ist, dass das verwendete Kalkhydrat nicht - wie es z.B. die Baukalknorm DIN EN 459-1:2010-12 fordert, eine Feuchte (freies Wasser) < 2 % aufweisen muß, sondern dass es herstellbedingte hohe Feuchten bis 25 Gew.% aufweisen kann. Hydrate mit gezielt herstellungsbedingt hohen Feuchten können also direkt in das Pelletiergerät gegeben werden, auf den kostenintensiven Trocknungsprozess kann verzichtet werden.

Ein Treibmittel oder auch Gasbildner im Sinne der Erfindung reagiert im alkalischen Milieu unter Gasbildung. Insbesondere handelt es sich bei dem erfindungsgemäß verwendeten Treibmittel um Aluminium (z.B. in Form von Aluminiumpulver und/oder -paste) und/oder Zinkoxid und/oder Wasserstoffperoxid. Das Treibmittel wird vorzugsweise gemeinsam oder kurz nach der Zugabe des Kalkhydrats und/oder Kalksteinmehls zu der Slurry zudosiert. Da das Ausgasen und damit die Porenbildung sofort stattfindet, ist keine Wartezeit notwendig, bis granuliert werden kann. Möglich ist allerdings, dass auch noch Gasbildung während der Granulierung erfolgt, solange bis das gesamte Treibmittel reagiert hat.

Luftporenbildner im Sinne der Erfindung sind Mittel, die eine bestimmte Menge von kleinen, gleichmäßig verteilten, kugelförmigen Luftporen während des Mischvorganges der wasserhaltigen Mischung einführen. Bekannt sind Luftporenbildner als Zusatzmittel für Beton. Die Stabilisierung der Luftporen in der wasserhaltigen Mischung erfolgt unter anderem durch Adsorption an Oberflächen und Reduktion der Oberflächenspannung des Wassers. Im Rahmen der Erfindung wird als Luftporenbildner vorzugsweise Cocamidpropyl Betain und/oder Natrium-Olefin-Sulfonat und/oder Natrium-Lauryl-Sulfat verwendet. Der Luftporenbildner wird vorzugsweise ebenfalls gemeinsam oder kurz nach Zugabe von Kalkhydrat oder Kalksteinmehl zu der Slurry zudosiert. Die Porenbildung erfolgt in an sich bekannter Weise beim Mischen und ist von der Mischintensität abhängig.

Für die Zugabe des vorgefertigten Schaums wird zunächst mit Hilfe eines Schaumgerätes und eines Schaumbildners ein Schaum mit vielen, gleichmäßig verteilten, kugelförmigen Luftporen erzeugt. Dieser vorgefertigte Schaum wird anschließend der zuvor hergestellten Frischmasse aus Kalksteinmehl und/oder Kalkhydrat und Wasser sowie gegebenenfalls anderen Bestandteilen zugeben. Im Rahmen der Erfindung wird als Schaumkonzentrat vorzugsweise Polypeptid-Alkylenpolyol und/oder Natrium-Olefinsulfonat und/oder Cocosalkyldimethylaminoxid verwendet.

Bei der Herstellung der mehrschichtigen Granalien 8 werden zunächst die Mutterkörner 9 durch Aufbaugranulation hergestellt analog wie oben beschrieben. Anschließend werden die Mutterkörner 9 nach und nach schrittweise mittels Aufbauagglomeration mit einer oder mehreren Agglomeratmischungen ummantelt zur Ausbildung der Agglomeratschichten 10. Die einzelnen Agglomeratmischungen enthalten ebenfalls zumindest Kalksteinmehl und/oder Kalkhydrat, Wasser sowie erfindungsgemäß zumindest ein Porosierungsmittel.

Nach dem Granulieren werden die Granalien 1, 8 vorzugsweise getrocknet.

Im Folgenden werden bevorzugte Zusammensetzungen der Trockenmasse für die Herstellung des erfindungsgemäßen Sorptionsgranulats, insbesondere Gasabsorptionsgranulats angegeben. Die einzelnen Bestandteile können dabei jeweils auf 100 Gew.% miteinander kombiniert werden, wobei das Bindemittel und die Additive lediglich bevorzugt enthalten sind:

| | | Gehalt bezogen auf die gesamte Trockenmasse [Gew. %] | |
|---|---|---|---|
| | | | vorzugsweise |
| Absorptionsmittel | Kalkhydrat und/oder Kalksteinmehl | 80-99,9 | 95-99,9 |
| Porosierungsmittel | Aluminium | 0,02-0,2 | 0,03-0,1 |
| | Luftporenbildner | 0,02-0,5 | 0,05-0,2 |
| Bindemittel | Stärke | < 4 | < 2 |
| | Methylcellulose | < 3 | < 1 |
| | Bentonit | < 8 | < 5 |
| Additiv | Natriumcarbonat | 0-5 | |
| | Kaliumcarbonat | 0-5 | |
| | Natriumhydroxid | 0-3 | |

Ausführungsbeispiel:

Aus folgender Zusammensetzung wurde eine Frischmasse hergestellt und durch Aufbauagglomeration ein Granulat aus kernlosen Granalien erzeugt. Der Luftporenbildner wurde zusammen mit dem Kalkhydrat der Slurry zugegeben. Der Wassergehalt der Frischmasse, bezogen auf die Gesamtmasse, betrug 33 Gew.%:

| Kalkhydrat | 99,3 Gew.% |
|---|---|
| Stärke (Stärkeether) | 0,6 Gew.% |
| Luftporenbildner (Natrium-Lauryl-Sulfat) | 0,1 Gew.% |

Das hergestellte Granulat hatte eine sehr hohe, offene Porosität und dadurch hervorragende Eigenschaften bezüglich der Absorption von $SO_X$.

Wie bereits erläutert, wurde im Rahmen der Erfindung überraschenderweise herausgefunden, dass es möglich ist, der Frischmasse bzw. Mischung für die Aufbauagglomeration Porosierungsmittel zuzugeben und dadurch ein offenes Porensystem in den Granalien zu erzeugen. Insbesondere ist es überraschend, dass die erzeugten Poren bei der Granulation nicht zerstört werden und auch nach dem Trocknen stabil bleiben. Insbesondere scheint der Luftporenbildner alle Poren des offenen Porensystems zu stabilisieren. Aufgrund der erzeugten, miteinander verbundenen Poren weisen die erfindungsgemäßen Granalien die geringen Trockenrohdichten bei hohem $Ca(OH)_2$ und/oder $CaCO_3$-Gehalt von > 80 Gew.%, bevorzugt > 95 Gew.% auf und sind diffusionsoffen. Das zu absorbierende Schadgas kann bis ins Innere der Granalien vordringen und die unerwünschte Schalenbildung wird verhindert. Dies führt zu einer sehr hohen Abscheideleistung des erfindungsgemäßen Gasabsorptionsgranulats. Dabei liegt es selbstverständlich im Rahmen der Erfindung, dass die Granalien auch geschlossene Poren enthalten. Deren Anteil ist aber gering.

Die Poren unterbrechen aber offenbar auch das Kapillarporensystem der Granalien. Dadurch wird in den Granalien kapillar gebundenes Wasser besser zurück gehalten und steht für die Reaktion auch noch bei hohen Temperaturen zur Verfügung. Dies begünstigt die Reaktion zwischen den $SO_X$-haltigen Abgasen und dem $CaCO_3$ bzw. $Ca(OH)_2$ ebenfalls und verbessert die Abscheideleistung des erfindungsgemäßen Gasabsorptionsgranulats weiter.

Von weiterem Vorteil des erfindungsgemäßen Sorptionsgranulats ist die katalytische Wirkung von Kalk bei der Zersetzung organischer Verbindungen. Dies hat einen positiven Einfluss auf die Reduzierung schädlicher organischer Kohlenwasserstoffverbindungen im Rauchgas.

Im Rahmen der Erfindung liegt es dabei auch, dass nicht alle Agglomeratschichten der mehrschichtigen Granalien die erfindungsgemäß erzeugten Poren aufweisen, obwohl dies bevorzugt ist. Auch muss das Mutterkorn nicht unbedingt die Poren aufweisen. Zumindest eine der Agglomeratschichten oder das Mutterkorn weist erfindungsgemäß aber die Poren auf, um die Diffusion der Schadgase durch die mehrschichtigen Granalien zu gewährleisten. Die anderen Agglomeratschichten bzw. das Mutterkorn weisen dann z.B. poröse CSH-Mehlkörner auf, so dass die offene Porosität der Granalien erhalten bleibt.

Wie schon im Rahmen der Herstellung erwähnt, liegt es im Rahmen der Erfindung, anstelle des Kalksteinmehls bzw. des Kalkhydrats oder zusätzlich als $Ca(OH)_2$ und/oder $CaCO_3$-haltiges Entschwefelungsmittel bzw. $Ca(OH)_2$ und/oder $CaCO_3$-haltiges, $SO_X$-absorbierendes Mittel bzw. gefälltes Calciumcarbonat (PCC) und/oder gefälltes Calciummagnesiumcarbonat und/oder Kreide und/oder Dolomitmehl und/oder Dolomithydrat (gelöschter Dolomit) zu verwenden. Bei PCC (precipitated calcium carbonate) handelt es sich um synthetisches bzw. synthetisch hergestelltes Calciumcarbonat ($CaCO_3$). PCC wird auch als gefälltes bzw. ausgefälltes Calciumcarbonat bezeichnet. Im Unterschied dazu handelt es sich bei GCC (ground calcium carbonate) um gemahlenes Calciumcarbonat natürlichen Ursprungs (=Kalksteinmehl). Die Herstellung von PCC erfolgt durch Reaktion von Kohlendioxid mit Kalkmilch. Die Kalkmilch wird entweder durch Löschen von Branntkalk oder durch Dispergieren von Calciumhydroxid in Wasser hergestellt. Calciummagnesiumcarbonat wird entsprechend hergestellt.

**Patentansprüche**

1. Sorptionsgranulat aus aufbauagglomerierten, porösen Granalien (1;8) zur Abscheidung, insbesondere Absorption, von Schadgasen, insbesondere von SOx und/oder HF und/oder HCl, aus Abgasen thermischer Prozesse, wobei die Granalien (1;8) > 80 Gew.%, bevorzugt > 95 Gew.% $Ca(OH)_2$ und/oder $CaCO_3$ bezogen auf die Trockenmasse enthalten, und wobei die Granalien (1;5) miteinander agglomerierte Primärpartikel (3) enthalten,
   **dadurch gekennzeichnet, dass**
   die Granalien (1;8) eine Trockenrohdichte p, bestimmt mittels Rohdichtepyknometer, von 0,5 bis 1,2 kg/dm$^3$, bevorzugt 0,7 bis 1,1 kg/dm$^3$ aufweisen, und dass
   die Granalien (1 ;8) ein offenes Porensystem (4) mit mittels eines Porosierungsmittels während der Herstellung des Sorptionsgranulats erzeugten Poren (7) aufweisen, welche zwischen den Primärpartikeln (3) vorhanden sind.

2. Sorptionsgranulat nach Anspruch 1,
   **dadurch gekennzeichnet, dass**
   die Granalien (1;8) eine aus Trockenrohdichte p, bestimmt mittels Rohdichtepyknometer, und Reindichte $\rho_0$, bestimmt mit einem Heliumpyknometer, bestimmte Porosität $\phi$ von 45 bis 73 Vol.%, bevorzugt 55 bis 65 Vol.% aufweisen, wobei die Porosität $\phi$ gemäß der Formel $\phi = (1 - \rho/\rho_0) \times 100\%$ berechnet wird.

3. Sorptionsgranulat nach Anspruch 1 oder 2, **dadurch gekennzeichnet, dass**
   das offene Porensystem (4) aus miteinander verbundenen Luftporen (5) besteht, wobei es sich bei einem Teil der Luftporen (5) um die mittels des Luftporenbildners erzeugten Poren (7) handelt.

4. Sorptionsgranulat nach einem der vorhergehenden Ansprüche, **dadurch gekennzeichnet, dass**
   einzelne der Luftporen (5;7) an einer Kornaußenfläche (6) der Granalien (1) ins Freie münden, wobei das offene Porensystem (4) über diese Luftporen (5;7) mit der Umgebung in Verbindung steht.

5. Sorptionsgranulat nach einem der vorhergehenden Ansprüche,
   **dadurch gekennzeichnet, dass**
   die Primärpartikel (3) eine Korngröße ≤ 250 μm, bevorzugt ≤ 90 μm aufweisen.

6. Sorptionsgranulat nach einem der vorhergehenden Ansprüche,
   **dadurch gekennzeichnet, dass**
   die Granalien (1;8) > 80 Gew.%, insbesondere > 95 Gew.% Kalkhydrat und/oder Kalksteinmehl und/oder gefälltes Calciumcarbonat und/oder Kreide aufweisen, bezogen auf den gesamten Feststoffanteil der Granalien (1;8).

7. Sorptionsgranulat nach einem der, vorhergehenden Ansprüche,
   **dadurch gekennzeichnet, dass**
   die mittels des Porosierungsmittels erzeugten Poren (7) teilweise nahezu kugelförmig oder schlauchförmig ausgebildet sind.

8. Sorptionsgranulat nach einem der vorhergehenden Ansprüche,
   **dadurch gekennzeichnet, dass**
   das Sorptionsgranulat einen Wassergehalt von 0,5 bis 10 Gew.%, bevorzugt von 1 bis 5 Gew.%, bestimmt nach DIN EN 459-2 aufweist.

9. Sorptionsgranulat nach einem der vorhergehenden Ansprüche,
**dadurch gekennzeichnet, dass**
die Granalien (1;8) eine Reindichte $\rho_0$, bestimmt mit einem Heliumpyknometer, von 2,0 bis 2,8 kg/dm$^3$, vorzugsweise von 2,0 bis 2,4 kg/dm$^3$, bevorzugt 2,1 bis 2,3 kg/dm$^3$ aufweisen.

10. Sorptionsgranulat nach einem der vorhergehenden Ansprüche,
**dadurch gekennzeichnet, dass**
das Sorptionsgranulat eine spezifische Oberfläche gemessen nach BET von 10 bis 60 m$^2$/g, bevorzugt von 20 bis 45 m$^2$/g aufweist.

11. Sorptionsgranulat nach einem der vorhergehenden Ansprüche,
**dadurch gekennzeichnet, dass**
das Sorptionsgranulat eine Korngrößenverteilung von 1 bis 20 mm, bevorzugt von 2 bis 10 mm, besonders bevorzugt von 2 bis 6 mm aufweist.

12. Sorptionsgranulat nach einem der vorhergehenden Ansprüche,
**dadurch gekennzeichnet, dass**
zumindest ein Teil der Granalien (1) kernlos ist.

13. Sorptionsgranulat nach einem der vorhergehenden Ansprüche,
**dadurch gekennzeichnet, dass**
zumindest ein Teil der Granalien (8) mehrschichtig ist und ein Mutterkorn (9) und zumindest eine, das Mutterkorn (9) umhüllende, Agglomeratschicht (10), vorzugsweise mehrere übereinander angeordnete Agglomeratschichten (10), aufweist.

14. Sorptionsgranulat nach Anspruch 13,
**dadurch gekennzeichnet, dass**
zumindest das Mutterkorn (9) und/oder eine Agglomeratschicht (10) die mittels eines Porosierungsmittels erzeugten Poren (7) aufweist.

15. Verfahren zur Herstellung eines Sorptionsgranulats nach einem der vorhergehenden Ansprüche mittels Aufbauagglomeration,
**dadurch gekennzeichnet, dass**
vor und/oder während des Agglomerierens mittels eines Porosierungsmittels Poren (7) in die Granalien (1;8) zwischen die Primärpartikel (3) eingebracht werden.

16. Verfahren nach Anspruch 15, **dadurch gekennzeichnet, dass**
die Granalien (1;8) durch Granulation aus einer oder mehreren jeweils Wasser und zumindest eine Ca(OH)$_2$- und/oder CaCO$_3$-haltige Mehl-komponente enthaltenden Frischmasse(n) hergestellt werden, wobei die Poren (7) mittels des Porosierungsmittels in zumindest eine der Frischmassen, vorzugsweise in alle Frischmassen, vor dem Granulieren eingebracht werden.

17. Verfahren nach Anspruch 15 oder 16, **dadurch gekennzeichnet, dass**
als Porosierungsmittel ein Treibmittel, insbesondere Aluminium und/oder Zinkoxid und/oder Wasserstoffperoxid, und/oder ein Luftporenbildner, insbesondere Cocamidpropyl Betain und/oder Natrium-Olefin-Sulfonat und/oder Natrium-Lauryl-Sulfat, und/oder vorgefertigter Schaum verwendet wird.

18. Verfahren nach einem der Ansprüche 15 bis 17, **dadurch gekennzeichnet, dass**
die kernlosen Granalien (1) mittels Aufbauagglomeration aus einer homogenen Frischmasse hergestellt werden, die zumindest eine SO$_X$-absorbierende Ca-Komponente, wie Kalksteinmehl und/oder Kalkhydrat und/oder Kreidemehl und/oder gefälltes Calciumcarbonat und/oder Dolomitmehl und/oder Dolomithydrat, Wasser und die mittels des Porosierungsmittels erzeugten Poren (5;7) enthält, wobei die Poren (5;7) in die Frischmasse mittels des Porosierungsmittels vor und/oder während des Agglomerierens eingebracht werden.

19. Verfahren nach einem der Ansprüche 15 bis 17, **dadurch gekennzeichnet, dass**
die mehrschichtigen Granalien (5) hergestellt werden mittels schrittweiser Aufbauagglomeration aus mehreren Frischmassen, die jeweils zumindest eine SO$_X$-absorbierende Ca-Komponente, wie Kalksteinmehl und/oder Kalkhydrat und/oder Kreidemehl und/oder gefälltes Calciumcarbonat und/oder Dolomitmehl und/oder Dolomithydrat, und Wasser enthalten, wobei zumindest eine der Frischmassen die mittels des Porosierungsmittels erzeugten Poren (5;7) enthält, wobei die Poren (5;7) in die Frischmasse mittels des Porosierungsmittels vor und/oder während des Agglomerierens eingebracht werden.

20. Verfahren nach Anspruch 19, **dadurch gekennzeichnet, dass**
zunächst Mutterkörner (6) mittels Aufbauagglomeration aus einer ersten, wasserhaltigen Mischung erzeugt werden und anschließend auf die Mutterkörner (6) jeweils eine oder mehreren Agglomerationsschichten mittels schrittweiser Aufbauagglomeration aus weiteren, wasserhaltigen Mischungen aufgebracht werden.

21. Verwendung eines Gasabsorptionsgranulats nach einem der Ansprüche 1 bis 14 zur Entfernung von Schadgasen, vorzugsweise von $SO_x$ und/oder HF und/oder HCl, aus Abgasen thermischer Prozesse, insbesondere in einem Feststoff-Abgasreaktor.

**Claims**

1. Granular sorption material composed of buildupagglomerated, porous granules (1; 8) for removal, in particular absorption, of harmful gases, in particular of $SO_x$ and/or HF and/or HCl, from exhaust gases from thermal processes, where the granules (1; 8) contain > 80% by weight, preferably > 95% by weight, of $Ca(OH)_2$ and/or $CaCO_3$, based on the dry mass, and where the granules (1; 5) contain primary particles (3) agglomerated with one another,
**characterized in that**
the granules (1; 8) have a dry bulk density p, determined by means of a bulk density pycnometer, of from 0.5 to 1.2 $kg/dm^3$, preferably from 0.7 to 1.1 $kg/dm^3$, and **in that** the granules (1; 8) have an open pore system (4) having pores (7) which have been produced by means of a porositising agent during production of the granular sorption material and are present between the primary particles (3).

2. Granular sorption material according to Claim 1,
**characterized in that**
the granules (1; 8) have a porosity determined from the dry bulk density $\rho$, determined by means of a bulk density pycnometer, and the true density po, determined by means of a helium pycnometer, of from 45 to 73% by volume, preferably from 55 to 65% by volume, where the porosity $\varphi$ is calculated according to the formula $\varphi = (1 - \rho/\rho_0) \times 100\%$.

3. Granular sorption material according to Claim 1 or 2,
**characterized in that**
the open pore system (4) consists of interconnected air pores (5), where part of the air pores (5) is the pores (7) produced by means of the air pore former.

4. Granular sorption material according to any of the preceding claims,
**characterized in that**
some of the air pores (5; 7) open to the outside at a grain outer surface (6) of the granules (1), where the open pore system (4) is in communication with the surroundings via these air pores (5; 7).

5. Granular sorption material according to any of the preceding claims,
**characterized in that**
the primary particles (3) have a particle size of $\leq 250\ \mu m$, preferably $\leq 90\ \mu m$.

6. Granular sorption material according to any of the preceding claims,
**characterized in that**
the granules (1; 8) comprise > 80% by weight, in particular > 95% by weight, of calcium hydroxide and/or ground limestone and/or precipitated calcium carbonate and/or chalk, based on the total solids content of the granules (1; 8).

7. Granular sorption material according to any of the preceding claims,
**characterized in that**
the pores (7) produced by means of the porositising agent are partly almost spherical or tubular.

8. Granular sorption material according to any of the preceding claims,
**characterized in that**
the granular sorption material has a water content of from 0.5 to 10% by weight, preferably from 1 to 5% by weight, determined in accordance with DIN EN 459-2.

9. Granular sorption material according to any of the preceding claims,
**characterized in that**
the granules (1; 8) have a true density $\rho_0$, determined by means of a helium pycnometer, of from 2.0 to 2.8 kg/dm$^3$, preferably from 2.0 to 2.4 kg/dm$^3$, preferably from 2.1 to 2.3 kg/dm$^3$.

10. Granular sorption material according to any of the preceding claims,
**characterized in that**
the granular sorption material has a specific surface area measured by the BET method of from 10 to 60 m$^2$/g, preferably from 20 to 45 m$^2$/g.

11. Granular sorption material according to any of the preceding claims,
**characterized in that**
the granular sorption material has a particle size distribution of from 1 to 20 mm, preferably from 2 to 10 mm, particularly preferably from 2 to 6 mm.

12. Granular sorption material according to any of the preceding claims,
**characterized in that**
at least part of the granules (1) do not have a core.

13. Granular sorption material according to any of the preceding claims,
**characterized in that**
at least part of the granules (8) is multilayer and has a mother particle (9) and at least one agglomerate layer (10) surrounding the mother particle (9), preferably a plurality of superposed agglomerate layers (10).

14. Granular sorption material according to Claim 13,
**characterized in that**
at least the mother particle (9) and/or an agglomerate layer (10) has the pores (7) produced by means of a porositising agent.

15. Process for producing a granular sorption material according to any of the preceding claims by means of buildup agglomeration,
**characterized in that**
pores (7) are introduced into the granules (1; 8) between the primary particles (3) by means of a porositising agent before and/or during agglomeration.

16. Process according to Claim 15,
**characterized in that**
the granules (1; 8) are produced by granulation from one or more fresh composition(s) containing in each case water and at least one Ca(OH)$_2$- and/or CaCO$_3$-containing meal component, where the pores (7) are introduced by means of the porositising agent into at least one of the fresh compositions, preferably into all fresh compositions, before granulation.

17. Process according to Claim 15 or 16,
**characterized in that**
a blowing agent, in particular aluminium and/or zinc oxide and/or hydrogen peroxide, and/or an air pore former, in particular cocamide propyl betaine and/or sodium olefin sulfonate and/or sodium lauryl sulfate, is used as porositising agent and/or prefabricated foam is used.

18. Process according to any of Claims 15 to 17,
**characterized in that**
the granules (1) without a core are produced by means of buildup agglomeration from a homogeneous fresh composition containing at least one SO$_x$-absorbing Ca component such as ground limestone and/or calcium hydroxide and/or ground chalk and/or precipitated calcium carbonate and/or ground dolomite and/or hydrated dolomite, water and the pores (5; 7) produced by means of the porositising agent, where the pores (5; 7) are introduced into the fresh composition by means of the porositising agent before and/or during agglomeration.

**19.** Process according to any of Claims 15 to 17,
**characterized in that**
the multilayer granules (5) are produced by means of stepwise buildup agglomeration from a plurality of fresh compositions which in each case contain at least one SO$_x$-absorbing Ca component such as ground limestone and/or calcium hydroxide and/or ground chalk and/or precipitated calcium carbonate and/or ground dolomite and/or hydrated dolomite and water, where at least one of the fresh compositions contains the pores (5; 7) produced by means of the porositising agent, where the pores (5; 7) are introduced into the fresh composition by means of the porositising agent before and/or during agglomeration.

**20.** Process according to Claim 19,
**characterized in that**
mother particles (6) are firstly produced by means of buildup agglomeration from a first, water-containing mixture and in each case one or more agglomeration layers are subsequently applied to the mother particles (6) by means of stepwise buildup agglomeration from further, water-containing mixtures.

**21.** Use of a granular gas absorption material according to any of Claims 1 to 14
for removing harmful gases, preferably SO$_x$ and/or HF and/or HCl, from exhaust gases from thermal processes, in particular in a solids exhaust gas reactor.

**Revendications**

**1.** Granulat de sorption constitué de granulés poreux agglomérés structuralement (1 ; 8) pour la séparation, notamment l'absorption, de gaz nocifs, notamment de SOx et/ou d'HF et/ou d'HCl, à partir de gaz d'échappement de processus thermiques, les granulés (1 ; 8) contenant > 80 % en poids, de préférence > 95 % en poids de Ca(OH)$_2$ et/ou de CaCO$_3$, par rapport à la masse sèche, et les granulés (1 ; 5) contenant des particules primaires (3) agglomérées les unes avec les autres,
**caractérisé en ce que**
les granulés (1 ; 8) présentent une masse volumique apparente à sec p, déterminée au moyen d'un pycnomètre de mesure de la masse volumique apparente, de 0,5 à 1,2 kg/dm$^3$, de préférence de 0,7 à 1,1 kg/dm$^3$, et **en ce que** les granulés (1 ; 8) comprennent un système de pores ouvert (4) muni de pores (7) générés au moyen d'un agent porosant pendant la fabrication du granulat de sorption, qui sont présents entre les particules primaires (3).

**2.** Granulat de sorption selon la revendication 1,
**caractérisé en ce que**
les granulés (1 ; 8) présentent une porosité Φ déterminée à partir de la masse volumique apparente à sec $\rho$, déterminée au moyen d'un pycnomètre de mesure de la masse volumique apparente, et de la masse volumique réelle $\rho_0$, déterminée avec un pycnomètre à l'hélium, de 45 à 73 % en volume, de préférence de 55 à 65 % en volume, la porosité Φ étant calculée selon la formule Φ = (1 - $\rho/\rho_0$) x 100 %.

**3.** Granulat de sorption selon la revendication 1 ou 2,
**caractérisé en ce que**
le système de pores ouvert (4) est constitué par des pores d'air (5) reliés les uns avec les autres, une partie des pores d'air (5) consistant en les pores (7) générés au moyen de l'agent de formation de pores d'air.

**4.** Granulat de sorption selon l'une quelconque des revendications précédentes,
**caractérisé en ce que**
certains des pores d'air (5 ; 7) débouchent à l'air libre au niveau d'une surface extérieure de grain (6) des granulés (1), le système de pores ouvert (4) étant en connexion avec l'environnement par l'intermédiaire de ces pores d'air (5 ; 7).

**5.** Granulat de sorption selon l'une quelconque des revendications précédentes,
**caractérisé en ce que**
les particules primaires (3) présentent une taille de grain ≤ 250 μm, de préférence ≤ 90 μm.

**6.** Granulat de sorption selon l'une quelconque des revendications précédentes,
**caractérisé en ce que**
les granulés (1 ; 8) comprennent > 80 % en poids, notamment > 95 % en poids, de chaux hydratée et/ou de farine de calcaire et/ou de carbonate de calcium précipité et/ou de craie, par rapport à la proportion de solides totale des granulés (1 ; 8).

7. Granulat de sorption selon l'une quelconque des revendications précédentes,
   **caractérisé en ce que**
   les pores (7) générés au moyen de l'agent porosant sont en partie configurés approximativement sous forme sphérique ou sous forme tubulaire.

8. Granulat de sorption selon l'une quelconque des revendications précédentes,
   **caractérisé en ce que**
   le granulat de sorption présente une teneur en eau de 0,5 à 10 % en poids, de préférence de 1 à 5 % en poids, déterminée selon DIN EN 459-2.

9. Granulat de sorption selon l'une quelconque des revendications précédentes,
   **caractérisé en ce que**
   les granulés (1 ; 8) présente une masse volumique réelle po, déterminée avec un pycnomètre à l'hélium, de 2,0 à 2,8 $kg/dm^3$, préférentiellement de 2,0 à 2,4 $kg/dm^3$, de préférence de 2,1 à 2,3 $kg/dm^3$.

10. Granulat de sorption selon l'une quelconque des revendications précédentes,
    **caractérisé en ce que**
    le granulat de sorption présente une surface spécifique mesurée selon BET de 10 à 60 $m^2/g$, de préférence de 20 à 45 $m^2/g$.

11. Granulat de sorption selon l'une quelconque des revendications précédentes,
    **caractérisé en ce que**
    le granulat de sorption présente une distribution des tailles de grains de 1 à 20 mm, de préférence de 2 à 10 mm, de manière particulièrement préférée de 2 à 6 mm.

12. Granulat de sorption selon l'une quelconque des revendications précédentes,
    **caractérisé en ce que**
    au moins une partie des granulés (1) est sans noyau.

13. Granulat de sorption selon l'une quelconque des revendications précédentes,
    **caractérisé en ce que**
    au moins une partie des granulés (8) est multicouche et comprend un grain mère (9) et au moins une couche d'agglomérat (10), enveloppant le grain mère (9), préférentiellement plusieurs couches d'agglomérat (10) agencées les unes sur les autres.

14. Granulat de sorption selon la revendication 13, **caractérisé en ce que**
    au moins le grain mère (9) et/ou une couche d'agglomérat (10) comprend les pores (7) générés au moyen d'un agent porosant.

15. Procédé de fabrication d'un granulat de sorption selon l'une quelconque des revendications précédentes par agglomération structurale,
    **caractérisé en ce que**
    avant et/ou pendant l'agglomération, des pores (7) sont aménagés dans les granulés (1 ; 8) entre les particules primaires (3) au moyen d'un agent porosant.

16. Procédé selon la revendication 15,
    **caractérisé en ce que**
    les granulés (1 ; 8) sont fabriqués par granulation à partir d'une ou de plusieurs masses fraîches contenant respectivement de l'eau et au moins un composant sous forme de farine contenant du $Ca(OH)_2$ et/ou du $CaCO_3$, les pores (7) étant aménagés au moyen de l'agent porosant dans au moins une des masses fraîches, préférentiellement dans toutes les masses fraîches, avant la granulation.

17. Procédé selon la revendication 15 ou 16,
    **caractérisé en ce que**
    un agent gonflant, notamment de l'aluminium et/ou de l'oxyde de zinc et/ou du peroxyde d'hydrogène, et/ou un agent de formation de pores d'air, notamment de la cocamidopropylbétaïne et/ou du sulfonate d'oléfine sodique et/ou du sulfate de lauryle sodique, et/ou une mousse préfabriquée sont utilisés en tant qu'agent porosant.

**18.** Procédé selon l'une quelconque des revendications 15 à 17,
   **caractérisé en ce que**
   les granulés sans noyau (1) sont fabriqués par agglomération structurale à partir d'une masse fraîche homogène, qui contient au moins un composant Ca absorbant les $SO_x$, tel que de la farine de calcaire et/ou de la chaux hydratée et/ou de la farine de craie et/ou du carbonate de calcium précipité et/ou de la farine de dolomite et/ou de la dolomite hydratée, de l'eau et les pores (5 ; 7) générés au moyen de l'agent porosant, les pores (5 ; 7) étant aménagés dans la masse fraîche au moyen de l'agent porosant avant et/ou pendant l'agglomération.

**19.** Procédé selon l'une quelconque des revendications 15 à 17,
   **caractérisé en ce que**
   les granulés multicouches (5) sont fabriqués par agglomération structurale par étapes à partir de plusieurs masses fraîches, qui contiennent respectivement au moins un composant Ca absorbant les $SO_x$, tel que de la farine de calcaire et/ou de la chaux hydratée et/ou de la farine de craie et/ou du carbonate de calcium précipité et/ou de la farine de dolomite et/ou de la dolomite hydratée, et de l'eau, au moins une des masses fraîches contenant les pores (5 ; 7) générés au moyen de l'agent porosant, les pores (5 ; 7) étant aménagés dans la masse fraîche au moyen de l'agent porosant avant et/ou pendant l'agglomération.

**20.** Procédé selon la revendication 19,
   **caractérisé en ce que**
   des grains mères (6) sont tout d'abord générés par agglomération structurale à partir d'un premier mélange contenant de l'eau et ensuite respectivement une ou plusieurs couches d'agglomération sont appliquées sur les grains mères (6) par agglomération structurale par étapes à partir de mélanges contenant de l'eau supplémentaires.

**21.** Utilisation d'un granulat d'absorption de gaz selon l'une quelconque des revendications 1 à 14
   pour l'élimination de gaz nocifs, préférentiellement de $SO_x$ et/ou d'HF et/ou d'HCl, à partir de gaz d'échappement de processus thermiques, notamment dans un réacteur de gaz d'échappement à solides.

Figur 1:

**Figur 2:**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102009045278 A1
- DE 102011112657 A1
- WO 2013034314 A1
- DE 102011113034 A1